# EUROPEAN PATENT SPECIFICATION

(11) **EP 3 674 106 B1**
(45) Date of publication and mention of the grant of the patent: **13.10.2021**
(21) Application number: 19218350.7
(22) Date of filing: 19.12.2019
(51) Int. Cl.: B60C 11/24

(54) **TIRE WITH INTEGRATED TREAD WEAR INDICATOR**
REIFEN MIT INTEGRIERTER LAUFFLÄCHENABNUTZUNGSANZEIGE
PNEUMATIQUE DOTÉ D'UN INDICATEUR D'USURE DE BANDE DE ROULEMENT

(30) Priority: 20.12.2018 US 201816227548
(43) Date of publication of application: 01.07.2020
(73) Proprietor: The Goodyear Tire & Rubber Company, Akron, OH 44316 (US)
(72) Inventor: DIXON, Max Harold, Kent, OH Ohio 44240 (US); KOTANIDES, JR., John, Canton, OH Ohio 44708 (US); DEMAGALL, Christine Ann, Valley City, Ohio 44280 (US); SERVA, Jesse Brian, Akron, Ohio 44333 (US)
(74) Representative: Kutsch, Bernd

(56) References cited:
- EP-A2- 1 066 991
- FR-A1- 2 962 373

## Description

### Field of the Invention

The invention relates to pneumatic tires and to tread wear indicators for such tires. More particularly, the invention is directed to a tire with a visual tread wear indicator that is economical to form and is easy for a user to read and understand.

### Background of the Invention

In the pneumatic tire art, it is known that, as the tread of the tire wears away, the ability to maintain traction may diminish on wet or snow-covered roads. Accordingly, once the tread is worn beyond a certain tread depth, the tire should be replaced to maintain adequate traction.

In order to inform a vehicle user when a tire may need to be replaced due to tread wear, prior art tread wear indicators were developed. For example, some tread wear indicators involved providing features molded into locations on the tire tread that undesirably interfered with the flow of water and materials, or undesirably affected tread performance. In addition, many such prior art indicators have been difficult for a user to see. An additional disadvantage of certain prior art indicators has been a configuration that wore away before the user saw or understood the wear indication.

Still other indicators were developed that involved electronic sensors which measure tire wear and provided an alert or signal to the user as to the wear state of the tire. While such sensors have been suitable for their intended purpose, they unnecessarily add to the cost and complexity of the tire.

As a result, there is a need in the art for a tire with a tread wear indicator that is easy for a user to see, does not interfere with tire performance, and is economical to form and use.

FR 2 962 373 A1 and EP 1 066 991 A2 each describe a tire in accordance with the preamble of claim 1.

### Summary of the Invention

The invention relates to a tire in accordance with claim 1 and to a method in accordance with claim 14.

Dependent claims refer to preferred embodiments of the invention.

According to an exemplary embodiment of the invention, a tire includes a tread wear indicator. The tire includes a pair of sidewalls extending to a tread, and the tread includes a plurality of tread elements and a plurality of angular circumferential grooves, in which the grooves are comprised of circumferential groove segments. The tread wear indicator includes a first cutout formed in a wall of a first selected tread element, in which the first cutout faces a selected one of the circumferential groove segments. A second cutout is formed in a wall of a second selected tread element. The second cutout faces the selected circumferential groove segment and is opposite the first cutout. An indicator is formed in and extends across the selected circumferential groove segment and the first and second cutouts. The indicator includes a plurality of step elements descending from a radially outward surface of the tread toward the bottom of the selected circumferential groove segment. Each step element includes an axially-extending surface that is approximately parallel to and radially inward of the radially outward surface of the tread, and a radially-extending surface that extends approximately perpendicular to the axially-extending surface. The axially-extending surface of each step element is formed with indicia, which are all visible to a user of the tire from a radially outward direction before wear of the tire commences.

In a preferred aspect of the invention, the plurality of grooves is a plurality of at least substantially circumferentially oriented grooves, preferably angular circumferential grooves, and said groove segments are at least substantially circumferentially oriented groove segments.

In a preferred aspect of the invention, the radially outermost first surface of each respective each step element is radially inward of the radially outermost surface of the tread.

In accordance with one aspect of the invention, the tread wear indicator is formed with a length L₂ that is less than 80 percent of a length L₁ of the selected groove segment or in a range of from 30 to 60 percent of the length L₁ of the selected groove segment 28A.

In accordance with another aspect of the invention, the groove segments extend at an angle relative to a circumferential direction of the tread, the angle Θ being in a range of from 10 degrees to 30 degrees relative to the circumferential direction of the tread or being in a range of from -10 degrees to -30 degrees relative to the circumferential direction of the tread.

In a preferred aspect of the invention, the indicia are formed with a distance D across a width of the tread wear indicator that is in a range of from 80 percent to 100 percent of the width of the tread wear indicator.

In a preferred aspect of the invention, the plurality of step elements are formed in a staircase configuration.

In a preferred aspect of the invention, the first surface of a first one of the step elements is disposed at a height that corresponds to 75 percent or 70 percent to 80 percent of a tread height, the first surface of a second one of the step elements is disposed at a height that corresponds to 50 percent or 40 to 60 percent of the tread height, the first surface of a third one of the step elements is disposed at a height that corresponds to 25 percent or 20 percent to 30 percent of the tread height, and the first surface of a fourth one of the step elements is disposed at a height that corresponds to zero percent or 0 percent to 10 percent of the tread height, the tread height being preferably in a range of from 6 mm to 9 mm in case of a passenger car tire or being preferably in the range of from 10 mm to 16 mm in case of a truck tire.

In a preferred aspect of the invention, the tread comprises a plurality of said tread wear indicators, each one being formed in a respective selected one of the circumferential groove segments.

In a preferred aspect of the invention, the first cutout and/or the second cutout have a length in a range of from 100 percent to 150 percent, preferably 110 percent to 140 percent, of the length L₂ of the tread wear indicator in the selected groove segment. In an alternative embodiment, the first cutout and/or the second cutout may also a length in a range of from 40 to 90 percent, preferably 50 to 80 percent, of the length L₂ of the tread wear indicator in the selected groove segment.

In a preferred aspect of the invention, the shape of the first cutout is the same than the shape of the opposing second cutout.

In a preferred aspect of the invention, the width of the selected groove segment where the first cutout faces the second cutout is in a range of from 105 percent to 150 percent, preferably 110 percent to 140 percent, of the width of the selected groove segment where it does not have the opposing first and second cutout.

In a preferred aspect of the invention, the first cutout and/or the second cutout has the shape of a trough, preferably with rounded edges.

In a preferred aspect of the invention, the first cutout and/or the second cutout extends radially inwards from the radially outermost surface of the respective tread element in which it is formed to a depth of 100 percent of the depth of the selected groove segment or to a depth in a range of from 75 to 100 percent of the depth of the selected groove segment.

In a preferred aspect of the invention, the tread wear indicator includes at least four step elements.

In a preferred aspect of the invention, the first surface of each step element is disposed at a height that corresponds to a selected percentage of the tread height of the unworn tire.

In a preferred aspect of the invention, the first surface of each step element has a square or rectangular shape.

In a preferred aspect of the invention, the width W of the tread wear indicator corresponds to the width of the selected groove segment where the first cutout faces the second cutout.

In a preferred aspect of the invention, the width W of the tread wear indicator corresponds to 105 percent to 150 percent, preferably 110 percent to 140 percent, the width of the selected groove segment where the first cutout faces the second cutout.

In a preferred aspect of the invention, the indicia are formed with a distance D across the width W of the tread wear indicator, which is from 80 percent to 100 percent of the width W of the tread wear indicator.

### Definitions

The following definitions are applicable to the present invention.

"Axial" and "axially" mean lines or directions that are parallel to the axis of rotation of the tire.

"Circumferential" means lines or directions extending along the perimeter of the surface of the annular tread perpendicular to the axial direction.

"Equatorial plane" means the plane perpendicular to the axis of rotation of the tire and passing through the center of the tire tread.

"Groove" means an elongated void area in a tread that may extend in a circumferential, lateral or angled manner about the tread in a straight, curved, or zigzag configuration.

"Inner" means toward the inside of the tire.

"Lateral" and "laterally" are used to indicate axial directions across the tread of the tire.

"Radial" and "radially" are used to mean directions radially toward or away from the axis of rotation of the tire.

"Tread" means a molded rubber component which includes that portion of the tire that comes into contact with the road when the tire is normally inflated and under normal load. The tread has a depth conventionally measured from the tread outer surface to the bottom of the deepest groove of the tire.

"Tread element" or "traction element" means a rib or a block element defined by a shape having adjacent grooves.

### Brief Description of the Drawings

The invention will be described by way of example and with reference to the accompanying drawings, in which:
Figure 1 is a fragmentary perspective view of a tire including an exemplary embodiment of the tread wear indicator of the present invention;
Figure 2 is an enlarged fragmentary perspective view of the tire and tread wear indicator from the circled area shown in Figure 1;
Figure 3 is a fragmentary plan view of the tire and tread wear indicator shown in Figure 1; and
Figure 4 is a cross-sectional view of the tire and tread wear indicator taken along line 4-4 in Figure 3.

Similar numerals refer to similar parts throughout the drawings.

### Detailed Description of Example Embodiment of the Invention

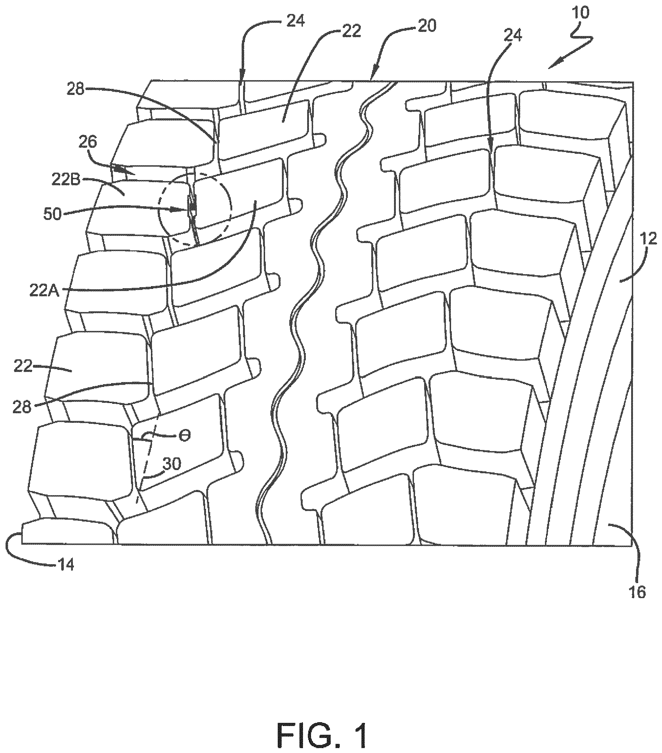

Turning to Figure 1, an exemplary tire is indicated at 10 and includes a pair of sidewalls 12 and 14 extending from respective bead areas 16 (only one shown) to a tread 20. The tread 20 includes a plurality of tread elements 22 that are defined by angular circumferential grooves 24 and angular lateral grooves 26. More particularly, each angular circumferential groove 24 extends about the tire 10 in a circumferential manner according to segments 28 that extend at an angle θ relative to a circumferential direction 30 of the tread 20. The angle θ may be from 10 degrees to 30 degrees relative to a circumferential direction 30 of the tread 20. The circumferential groove segments 28 are defined by respective segments of each lateral groove 26. In this manner, the tread elements 22 are angled relative to one another.

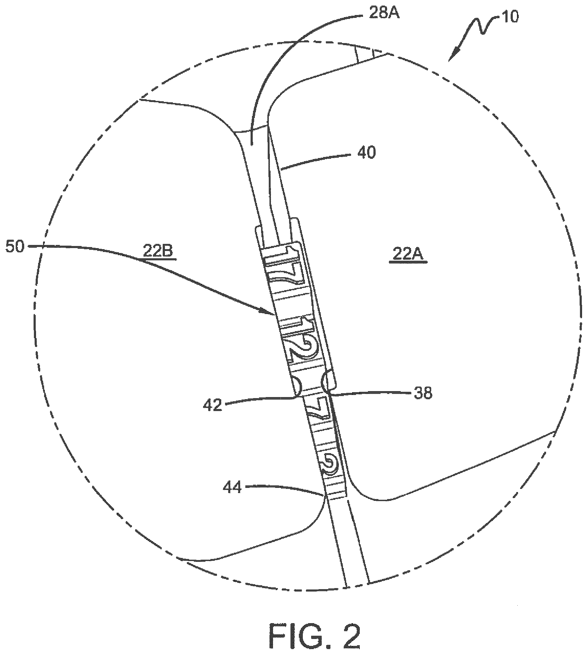

As shown in Figure 2, a selected one of the circumferential groove segments 28A extends between a first selected tread element 22A and a second selected tread element 22B. The first selected tread element 22A includes a first cutout 38 in a wall 40 facing the selected circumferential groove segment 28A. The second selected tread element 22B includes a second cutout 42 in a wall 42 facing the selected circumferential groove segment 28A and being opposite the first cutout 38.

An exemplary embodiment of the tread wear indicator of the present invention is indicated generally at 50. The tread wear indicator is disposed in the selected circumferential groove segment 28A and extends into the first cutout 38 and the second cutout 42. It is to be understood that the tread wear indicator 50 may be formed in any one of the circumferential groove segments 28 and corresponding tread elements 22 formed with cutouts 38 and 42. In addition, the tire 10 may include more than one tread wear indicator 50.

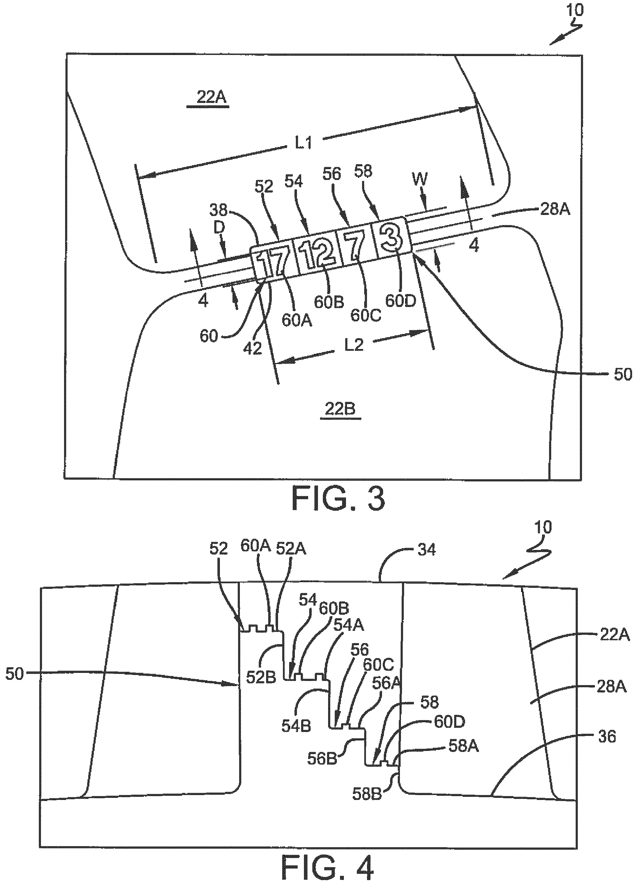

With reference to Figure 3, the tread wear indicator 50 extends completely across the selected circumferential groove segment 28A and the cutout 38 formed in the first selected tread element 22A and the cutout 42 formed in the second selected tread element 22B. More particularly, the tread wear indicator 50 is of a width W, which is the same width of the combined selected circumferential groove segment 28A and the first and second cutouts 38 and 42. In addition, the selected circumferential groove segment 28A is formed with a length L₁. The tread wear indicator 50 is formed with a length L₂, which is less than about 80 percent of the selected groove segment length L₁. By being of the large width W, the tread wear indicator 50 is prominent and easy to read.

With additional reference to Figure 4, the tread wear indicator 50 preferably is formed with a staircase configuration. More particularly, a plurality of step elements descends from a radially outward surface 34 of the tread 20 toward a bottom or radially inward surface 36 of the selected circumferential groove segment 28A. The tread wear indicator 50 includes at least two elements, and preferably four or more elements. As will be described below, each element is similar to the other elements in shape and configuration.

For example, a first step element 52 includes an axially-extending surface 52A that is approximately parallel to and radially inward of the outward tread surface 34. Preferably, the axially-extending surface 52A is formed with a square or rectangular shape. A radially-extending surface 52B extends from the axially-extending surface 52A in an approximately perpendicular manner.

A second step element 54 includes an axially-extending surface 54A that is parallel to and radially inward of the axially-extending surface 52A of the first step element 52. Preferably, the axially-extending surface 54A is formed with a square or rectangular shape. A radially-extending surface 54B extends from the axially-extending surface 54A in an approximately perpendicular manner.

A third step element 56 includes an axially-extending surface 56A that is parallel to and radially inward of the axially-extending surface 54A of the second step element 54. Preferably, the axially-extending surface 56A is formed with a square or rectangular shape. A radially-extending surface 56B extends from the axially-extending surface 56A in an approximately perpendicular manner.

A fourth step element 58 includes an axially-extending surface 58A that is parallel to and radially inward of the axially-extending surface 56A of the third step element 56. Preferably, the axially-extending surface 58A is formed with a square or rectangular shape. A radially-extending surface 58B extends from the axially-extending surface 58A to the bottom 36 of the selected circumferential groove segment 28A in an approximately perpendicular manner.

The height of each one of the step elements 52, 54, 56 and 58 is based upon the number of steps and the minimum desired indicator height employed for a particular configuration of the tread wear indicator 50. For example, the axially-extending surface 58A of the bottom step element 58 preferably is at a minimum desired indicator height. This height may correspond to a recommended minimum tread depth and is based upon particular design considerations for the tire 10.

The axially-extending surface 58A of the bottom step element 58 may thus be considered to be zero percent of the recommended tread height, while the new, unworn surface 34 of the tread 20 may be considered to be 100 percent of the recommended tread height. Each step element 52, 54, 56 and 58 thus is at a set height which corresponds to a specific percentage of the recommended tread height. For example, the axially-extending surface 52A of the first step element 52 may be at a height that corresponds to 75 percent of the difference between the height of the axially-extending surface 58A of the fourth step element 58A and the unworn tread surface 34. The axially-extending surface 58A of the first step element 58 may thus indicate a level or height at which 75 percent of the recommended tread height remains.

The axially-extending surface 54A of the second step element 54 may be at a height that corresponds to 50 percent of the difference between the height of the axially-extending surface 58A of the fourth step element 58 and the unworn tread surface 54. The axially-extending surface 54A of the second step element 54 may thus indicate a level or height at which 50 percent of the recommended tread height remains.

The axially-extending surface 56A of the third step element 56 may be at a height that corresponds to 25 percent of the difference between the height of the axially-extending surface 58A of the fourth step element 58 and the unworn tread surface 34. The axially-extending surface 56A of the third step element 56 may thus indicate a level or height at which 25 percent of the recommended tread height remains.

As described above, the axially-extending surface 58A of the fourth step element 58 may indicate a height at which 0 percent of the recommended tread height remains and tire replacement should occur.

Each step element 52, 54, 56 and 58 preferably is formed with indicia 60 for easy identification by a user. For example, the axially-extending surface 52A of the first step element 52 preferably is formed with a first number 60A, which is easily seen by a user. The axially-extending surface 54A of the second step element 54 preferably is formed with a second number 60B. The axially-extending surface 56A of the third step element 56 preferably is formed with a third number 60C. The axially-extending surface 58A of the fourth step element 58 preferably is formed with a fourth number 60D.

The indicia 60 are formed with a distance across the width W of the tread wear indicator 50, which is designated in Figure 3 as D. Preferably, the distance D is from about 80 percent to about 100 percent of the width W of the tread wear indicator 50. In addition, the first number 60A is the highest of the indicia 60, the second number 60B is the second highest, the third number 60C is the third highest and the fourth number 60D is the lowest.

Preferably, each indicia 60A, 60B, 60C and 60D corresponds to a remaining tread depth in millimeters or 32nds of an inch. The use of such clear number-based indicia 60 as described above allows a "countdown" of the remaining tread life of the tire 10, which provides an indicator that is easy for a user to see and understand. It is to be understood that the indicia 60 can be changed to different numbers or characters, depending on particular design considerations.

By being formed in the selected circumferential groove segment 28A, the tread wear indicator 50 is easy for a user to see. Also, the tread wear indicator 50 follows the contour of the selected circumferential groove segment 28A and does not interfere with the performance of the tread 20. Moreover, the tread wear indicator 50 is economical to form.

For example, the tread wear indicator 50 preferably is formed in the tire 10 when the tire is cured. As is known in the art, the tire 10 is cured in a mold (not shown). During curing, the tread 20 is formed. To form the tread wear indicator 50, a die insert is formed with the above-described features of the tread wear indicator. The die insert is disposed in a corresponding opening formed in the tire curing mold, and when the tread 20 is formed on the tire 10 during curing, the tread wear indicator 50 is also formed. The die insert may be 3D printed, cast or fabricated, and may be formed of any suitable mold material, including steel, aluminum and alloys thereof.

The present invention also includes a method of forming a tread wear indicator 50 in a tire 10 and a method of using a tread wear indicator in a tire. Each method includes steps in accordance with the description that is presented above and shown in Figures 1 through 4.

It is to be understood that the structure of the above-described tread wear indicator 50 may be altered or rearranged, or components or steps known to those skilled in the art omitted or added, without affecting the overall concept or operation of the invention. For example, arrangements or configurations for the step elements 52, 54, 56 and 58 or indicia 60 other than those described above may be employed without affecting the overall concept or operation of the invention. In addition, the tread wear indicator 50 may be formed in any one of the circumferential groove segments 28 and the tread elements 22, and the tire 10 may include more than one tread wear indicator disposed in different locations and/or alignments.

## Claims

1. A tire with a pair of sidewalls (12, 14) extending to a tread (20), the tread (20) including a plurality of tread elements (22A, 22B) and a plurality of grooves (24) comprising groove segments (28A) and a tread wear indicator (50), wherein a first cutout (38) is formed in a wall of a first tread element (22A), the first cutout (38) facing a selected one of the groove segments (28A); wherein a second cutout (42) is formed in a wall of a second tread element (22B), the second cutout (42) facing the selected groove segment (28A) and being opposite the first cutout (22A); wherein the tread wear indicator (50) is formed in and extends across the selected groove segment (28A) and the first and second cutouts (38, 42); wherein the tread wear indicator (50) includes a plurality of step elements (52, 54, 56, 58) descending from a radially outward surface of the tread (20) or the tread wear indicator (50) toward the bottom of the selected groove segment (28A), wherein each step element (52, 54, 56, 58) includes a first surface (52A, 54A, 56A, 58A) being at least approximately parallel to the radially outermost surface of the tread (20), and a radially-extending second surface (52B, 54B, 56B, 58B) preferably extending at least approximately perpendicular to the first surface (52A, 54A, 56A, 58A), and wherein the first surface (52A, 54A, 56A, 58A) of each step element (52, 54, 56, 58) is formed with or comprises indicia (60), wherein all of said indicia (60) are visible to a user of the tire (10) from a radially outward direction when the tire is unworn, **characterized in that** the tread wear indicator (50) is formed with a length (L₂) that is less than 80 percent of a length (L₁) of the selected groove segment (28A) and/or **in that** the groove segments (28A) extend at an angle relative to a circumferential direction of the tread (20), the angle (Θ) being in a range of from 10 degrees to 30 degrees relative to the circumferential direction of the tread (20) or being in a range of from -10 degrees to -30 degrees relative to the circumferential direction of the tread (20).

2. The tire of claim 1 wherein the plurality of grooves (24) is a plurality of at least substantially circumferentially oriented grooves (24), preferably angular circumferential grooves, and said groove segments (28A) are at least substantially circumferentially oriented groove segments (28A).

3. The tire of claim 1 or 2 wherein the radially outermost first surface (52A) of each respective each step element (52, 54, 56, 58) is radially inward of the radially outermost surface of the tread (20).

4. The tire of at least one of the previous claims, wherein the tread wear indicator (50) is formed with a length (L₂) that is in a range of from 30 to 60 percent of the length (L₁) of the selected groove segment (28A).

5. The tire of at least one of the previous claims, the indicia (60) are formed with a distance (D) across a width of the tread wear indicator (50) that is in a range of from 80 percent to 100 percent of the width of the tread wear indicator (50).

6. The tire of at least one of the previous claims, wherein the plurality of step elements (52, 54, 56, 58) are formed in a staircase configuration.

7. The tire of at least one of the previous claims, wherein the first surface (52A) of a first one of the step elements (52) is disposed at a height that corresponds to 75 percent or 70 percent to 80 percent of a tread height, the first surface (54A) of a second one of the step elements (54) is disposed at a height that corresponds to 50 percent or 40 to 60 percent of the tread height, the first surface (56A) of a third one of the step elements (56) is disposed at a height that corresponds to 25 percent or 20 percent to 30 percent of the tread height, and the first surface (58A) of a fourth one of the step elements (58) is disposed at a height that corresponds to zero percent or 0 percent to 10 percent of the tread height, the tread height being preferably in a range of from 6 mm to 9 mm in case of a passenger car tire or being preferably in the range of from 10 mm to 16 mm in case of a truck tire.

8. The tire of at least one of the previous claims, comprising a plurality of said tread wear indicators (50), each one being formed in a respective selected one of the circumferential groove segments (28A).

9. The tire of at least one of the previous claims, wherein the first cutout (38) and/or the second cutout (42) have a length in a range of from 100 percent to 150 percent, preferably 110 percent to 140 percent, of the length (L₂) of the tread wear indicator (50) in the selected groove segment (28A).

10. The tire of at least one of the previous claims, wherein the shape of the first cutout (38) is the same than the shape of the opposing second cutout (42).

11. The tire of at least one of the previous claims, wherein the width of the selected groove segment (28A) where the first cutout (38) faces the second cutout (42) is in a range of from 105 percent to 150 percent, preferably 110 percent to 140 percent, of the width of the selected groove segment (28A) where it does not have the opposing first and second cutout (38, 42).

12. The tire of at least one of the previous claims, wherein the first cutout (38) and/or the second cutout (42) has the shape of a trough, preferably with rounded edges.

13. The tire of at least one of the previous claims, wherein the first cutout (38) and/or the second cutout (42) extends radially inwards from the radially outermost surface of the respective tread element (22A, 22B) in which it is formed to a depth of 100 percent of the depth of the selected groove segment (28A) or to a depth in a range of from 75 to 100 percent of the depth of the selected groove segment (28A).

14. A method of manufacturing a tire with a pair of sidewalls (12, 14) extending to a tread (20), the tread (20) including a plurality of tread elements (22A, 22B) and a plurality of grooves (24) comprising groove segments (28A) and a tread wear indicator (50), wherein a first cutout (38) is formed in a wall of a first tread element (22A), the first cutout (38) facing a selected one of the groove segments (28A); wherein a second cutout (42) is formed in a wall of a second tread element (22B), the second cutout (42) facing the selected groove segment (28A) and being opposite the first cutout (22A); wherein the tread wear indicator (50) is formed in and extends across the selected groove segment (28A) and the first and second cutouts (38, 42); wherein the tread wear indicator (50) includes a plurality of step elements (52, 54, 56, 58) descending from a radially outward surface of the tread (20) or the tread wear indicator (50) toward the bottom of the selected groove segment (28A), wherein each step element (52, 54, 56, 58) includes a first surface (52A, 54A, 56A, 58A) being at least approximately parallel to the radially outermost surface of the tread (20), and a radially-extending second surface (52B, 54B, 56B, 58B) preferably extending at least approximately perpendicular to the first surface (52A, 54A, 56A, 58A), wherein the first surface (52A, 54A, 56A, 58A) of each step element (52, 54, 56, 58) is formed with or comprises indicia (60), wherein all of said indicia (60) are visible to a user of the tire (10) from a radially outward direction when the tire is unworn, and wherein the tread wear indicator (50) is formed with a length (L₂) that is less than 80 percent of a length (L₁) of the selected groove segment (28A) and/or wherein the groove segments (28A) extend at an angle relative to a circumferential direction of the tread (20), the angle (Θ) being in a range of from 10 degrees to 30 degrees relative to the circumferential direction of the tread (20) or being in a range of from -10 degrees to -30 degrees relative to the circumferential direction of the tread (20), the method comprising the step a forming the tread wear indicator (50) with an insert that is disposed in a mold in which the tire (10) is cured.

## Patentansprüche

1. Reifen mit einem Paar von Seitenwänden (12, 14), die sich zu einer Lauffläche (20) erstrecken, wobei die Lauffläche (20) mehrere Laufflächenelemente (22A, 22B) und mehrere Rillen (24), die Rillensegmente (28A) umfassen, und eine Laufflächenverschleißanzeige (50) beinhaltet, wobei ein erster Ausschnitt (38) in einer Wand eines ersten Laufflächenelements (22A) ausgebildet ist, wobei der erste Ausschnitt (38) einem ausgewählten der Rillensegmente (28A) zugewandt ist; wobei ein zweiter Ausschnitt (42) in einer Wand eines zweiten Laufflächenelements (22B) ausgebildet ist, wobei der zweite Ausschnitt (42) dem ausgewählten Rillensegment (28A) zugewandt ist und dem ersten Ausschnitt (22A) gegenüberliegt; wobei die Laufflächenverschleißanzeige (50) in dem ausgewählten Rillensegment (28A) und dem ersten und dem zweiten Ausschnitt (38, 42) ausgebildet ist und sich über diese hinweg erstreckt; wobei die Laufflächenverschleißanzeige (50) mehrere Stufenelemente (52, 54, 56, 58) beinhaltet, die von einer radial nach außen gerichteten Oberfläche der Lauffläche (20) oder der Laufflächenverschleißanzeige (50) zu dem Boden des ausgewählten Rillensegments (28A) hin abfallen, wobei jedes Stufenelement (52, 54, 56, 58) eine erste Oberfläche (52A, 54A, 56A, 58A), die wenigstens ungefähr parallel zu der radial äußersten Oberfläche der Lauffläche (20) ist, und eine sich radial erstreckende zweite Oberfläche (52B, 54B, 56B, 58B) beinhaltet, die sich vorzugsweise wenigstens ungefähr senkrecht zu der ersten Oberfläche (52A, 54A, 56A, 58A) erstreckt, und wobei die erste Oberfläche (52A, 54A, 56A, 58A) jedes Stufenelements (52, 54, 56, 58) mit Zeichen (60) ausgebildet ist oder diese umfasst, wobei alle der Zeichen (60) für einen Benutzer des Reifens (10) aus einer radial nach außen gerichteten Richtung sichtbar sind, wenn der Reifen nicht abgenutzt ist, **dadurch gekennzeichnet, dass** die Laufflächenverschleißanzeige (50) mit einer Länge (L₂) ausgebildet ist, die weniger als 80 Prozent einer Länge (L₁) des ausgewählten Rillensegments (28A) beträgt und/oder dadurch, dass sich die Rillensegmente (28A) in einem Winkel relativ zu einer Umfangsrichtung der Lauffläche (20) erstrecken, wobei der Winkel (Θ) in einem Bereich von 10 Grad bis 30 Grad relativ zu der Umfangsrichtung der Lauffläche (20) oder in einem Bereich von -10 Grad bis -30 Grad relativ zu der Umfangsrichtung der Lauffläche (20) liegt.

2. Reifen nach Anspruch 1, wobei die mehreren Rillen (24) mehrere wenigstens im Wesentlichen in Umfangsrichtung ausgerichtete Rillen (24) sind, vorzugsweise winkelförmige Umfangsrillen, und die Rillensegmente (28A) wenigstens im Wesentlichen in Umfangsrichtung ausgerichtete Rillensegmente (28A) sind.

3. Reifen nach Anspruch 1 oder 2, wobei die radial äußerste erste Oberfläche (52A) jedes jeweiligen Stufenelements (52, 54, 56, 58) radial nach innen gerichtet von der radial äußersten Oberfläche der Lauffläche (20) liegt.

4. Reifen nach wenigstens einem der vorhergehenden Ansprüche, wobei die Laufflächenverschleißanzeige (50) mit einer Länge (L₂) ausgebildet ist, die in einem Bereich von 30 bis 60 Prozent der Länge (L₁) des ausgewählten Rillensegments (28A) liegt.

5. Reifen nach wenigstens einem der vorhergehenden Ansprüche, wobei die Zeichen (60) mit einem Abstand (D) über eine Breite der Laufflächenverschleißanzeige (50) hinweg ausgebildet sind, die in einem Bereich von 80 Prozent bis 100 Prozent der Breite der Laufflächenverschleißanzeige (50) liegt.

6. Reifen nach wenigstens einem der vorhergehenden Ansprüche, wobei die mehreren Stufenelemente (52, 54, 56, 58) in einer Treppenkonfiguration ausgebildet sind.

7. Reifen nach wenigstens einem der vorhergehenden Ansprüche, wobei die erste Oberfläche (52A) eines ersten der Stufenelemente (52) in einer Höhe angeordnet ist, die 75 Prozent oder 70 Prozent bis 80 Prozent einer Laufflächenhöhe entspricht, die erste Oberfläche (54A) eines zweiten der Stufenelemente (54) in einer Höhe angeordnet ist, die 50 Prozent oder 40 bis 60 Prozent der Laufflächenhöhe entspricht, die erste Oberfläche (56A) eines dritten der Stufenelemente (56) in einer Höhe angeordnet ist, die 25 Prozent oder 20 Prozent bis 30 Prozent der Laufflächenhöhe entspricht, und die erste Oberfläche (58A) eines vierten der Stufenelemente (58) in einer Höhe angeordnet ist, die null Prozent oder 0 Prozent bis 10 Prozent der Laufflächenhöhe entspricht, wobei die Laufflächenhöhe in dem Fall eines Pkw-Reifens vorzugsweise in einem Bereich von 6 mm bis 9 mm liegt oder in dem Fall eines LKW-Reifens vorzugsweise in dem Bereich von 10 mm bis 16 mm liegt.

8. Reifen nach wenigstens einem der vorhergehenden Ansprüche, der mehrere der Laufflächenverschleißanzeigen (50) umfasst, wobei jeder in einem jeweils ausgewählten der Umfangsrillensegmente (28A) ausgebildet ist.

9. Reifen nach wenigstens einem der vorhergehenden Ansprüche, wobei der erste Ausschnitt (38) und/oder der zweite Ausschnitt (42) eine Länge in einem Bereich von 100 Prozent bis 150 Prozent, vorzugsweise 110 Prozent bis 140 Prozent der Länge (L₂) der Laufflächenverschleißanzeige (50) in dem ausgewählten Rillensegment (28A) aufweist.

10. Reifen nach wenigstens einem der vorhergehenden Ansprüche, wobei die Gestalt des ersten Ausschnitts (38) dieselbe wie die Gestalt des gegenüberliegenden zweiten Ausschnitts (42) ist.

11. Reifen nach wenigstens einem der vorhergehenden Ansprüche, wobei die Breite des ausgewählten Rillensegments (28A), bei dem der erste Ausschnitt (38) dem zweiten Ausschnitt (42) zugewandt ist, in einem Bereich von 105 Prozent bis 150 Prozent, vorzugsweise 110 Prozent bis 140 Prozent, der Breite des ausgewählten Rillensegments (28A) liegt, bei dem es nicht den gegenüberliegenden ersten und zweiten Ausschnitt (38, 42) aufweist.

12. Reifen nach wenigstens einem der vorhergehenden Ansprüche, wobei der erste Ausschnitt (38) und/oder der zweite Ausschnitt (42) die Gestalt einer Mulde, vorzugsweise mit abgerundeten Kanten, aufweist.

13. Reifen nach wenigstens einem der vorhergehenden Ansprüche, wobei sich der erste Ausschnitt (38) und/oder der zweite Ausschnitt (42) von der radial äußersten Oberfläche des jeweiligen Laufflächenelements (22A, 22B), in dem er ausgebildet ist, radial nach innen gerichtet erstreckt, bis zu einer Tiefe von 100 Prozent der Tiefe des ausgewählten Rillensegments (28A) oder bis zu einer Tiefe in einem Bereich von 75 bis 100 Prozent der Tiefe des ausgewählten Rillensegments (28A).

14. Verfahren zum Herstellen eines Reifens mit einem Paar von Seitenwänden (12, 14), die sich zu einer Lauffläche (20) erstrecken, wobei die Lauffläche (20) mehrere Laufflächenelemente (22A, 22B) und mehrere Rillen (24), die Rillensegmente (28A) umfassen, und eine Laufflächenverschleißanzeige (50) beinhaltet, wobei ein erster Ausschnitt (38) in einer Wand eines ersten Laufflächenelements (22A) ausgebildet ist, wobei der erste Ausschnitt (38) einem ausgewählten der Rillensegmente (28A) zugewandt ist; wobei ein zweiter Ausschnitt (42) in einer Wand eines zweiten Laufflächenelements (22B) ausgebildet ist, wobei der zweite Ausschnitt (42) dem ausgewählten Rillensegment (28A) zugewandt ist und dem ersten Ausschnitt (22A) gegenüberliegt; wobei die Laufflächenverschleißanzeige (50) in dem ausgewählten Rillensegment (28A) und dem ersten und dem zweiten Ausschnitt (38, 42) ausgebildet ist und sich über diese hinweg erstreckt; wobei die Laufflächenverschleißanzeige (50) mehrere Stufenelemente (52, 54, 56, 58) beinhaltet, die von einer radial nach außen gerichteten Oberfläche der Lauffläche (20) oder der Laufflächenverschleißanzeige (50) zu dem Boden des ausgewählten Rillensegments (28A) hin abfallen, wobei jedes Stufenelement (52, 54, 56, 58) eine erste Oberfläche (52A, 54A, 56A, 58A), die wenigstens ungefähr parallel zu der radial äußersten Oberfläche der Lauffläche (20) ist, und eine sich radial erstreckende zweite Oberfläche (52B, 54B, 56B, 58B) beinhaltet, die sich vorzugsweise wenigstens ungefähr senkrecht zu der ersten Oberfläche (52A, 54A, 56A, 58A) erstreckt, wobei die erste Oberfläche (52A, 54A, 56A, 58A) jedes Stufenelements (52, 54, 56, 58) mit Zeichen (60) ausgebildet ist oder diese umfasst, wobei alle der Zeichen (60) für einen Benutzer des Reifens (10) aus einer radial nach außen gerichteten Richtung sichtbar sind, wenn der Reifen nicht abgenutzt ist, und wobei die Laufflächenverschleißanzeige (50) mit einer Länge (L₂) ausgebildet ist, die weniger als 80 Prozent einer Länge (L₁) des ausgewählten Rillensegments (28A) beträgt und/oder wobei sich die Rillensegmente (28A) in einem Winkel relativ zu einer Umfangsrichtung der Lauffläche (20) erstrecken, wobei der Winkel (Θ) in einem Bereich von 10 Grad bis 30 Grad relativ zu der Umfangsrichtung der Lauffläche (20) oder in einem Bereich von - 10 Grad bis -30 Grad relativ zu der Umfangsrichtung der Lauffläche (20) liegt, wobei das Verfahren den Schritt eines Ausbildens der Laufflächenverschleißanzeige (50) mit einem Einsatz, der in einer Form angeordnet ist, in der der Reifen (10) ausgehärtet ist, umfasst.

## Revendications

1. Bandage pneumatique qui comprend une paire de flancs (12, 14) qui s'étendent dans la direction d'une bande de roulement (20), la bande de roulement (20) englobant un certain nombre d'éléments de bande de roulement (22A, 22B) et un certain nombre de rainures (24) qui comprennent des segments de rainures (28A) et un indicateur de l'usure de la bande de roulement (50) ; dans lequel une première découpe (38) est réalisée dans une paroi d'un premier élément de bande de roulement (22B), la première découpe (38) faisant face à un segment de rainure qui est sélectionné parmi les segments de rainures (28A) ; dans lequel une deuxième découpe (42) est réalisée dans une paroi d'un deuxième élément de bande de roulement (22B), la deuxième découpe (42) faisant face au segment de rainure (28A) qui a été sélectionné et étant disposée à l'opposé de la première découpe (22A) ; dans lequel l'indicateur de l'usure de la bande de roulement (50) est réalisé dans le segment de rainure (28A) qui a été sélectionné et dans la première et la deuxième découpe (38, 42) et s'étend à travers ledit segment et les découpes en question ; dans lequel l'indicateur de l'usure de la bande de roulement (50) englobe un certain nombre d'éléments sous la forme de gradins (52, 54, 56, 58) qui descendent à partir d'une surface de la bande de roulement (20) orientée vers l'extérieur dans la direction radiale ou à partir de l'indicateur de l'usure de la bande de roulement (50) dans la direction de la base du segment de rainure (28A) qui a été sélectionné ; dans lequel chaque élément sous la forme d'un gradin (52, 54, 56, 58) englobe une première surface (52A, 54A, 56A, 58A) qui est au moins de manière approximative parallèle à la surface la plus externe de la bande de roulement (20) dans la direction radiale, et une deuxième surface qui s'étend dans la direction radiale (52B, 54B, 56B, 58B), de préférence qui s'étend au moins de manière approximative perpendiculairement à la première surface (52A, 54A, 56A, 58A) ; et dans lequel la première surface (52A, 54A, 56A, 58A) de chaque élément sous la forme d'un gradin (52, 54, 56, 58) est réalisée avec des repères (60) ou comprend les repères en question ; dans lequel la totalité desdits repères (60) sont visibles pour un utilisateur du bandage pneumatique (10) à partir d'une direction orientée vers l'extérieur dans la direction radiale lorsque le bandage pneumatique est intact, **caractérisé en ce que** l'indicateur de l'usure de la bande de roulement (50) est réalisé avec une longueur (L₂) qui représente moins de 80 pour cent d'une longueur (L₁) du segment de rainure (28A) qui a été sélectionné et/ou **en ce que** les segments de rainures (28A) s'étendent en formant un angle par rapport à une direction circonférentielle de la bande de roulement (20), l'angle (Θ) se situant dans une plage allant de 10 degrés à 30 degrés par rapport à la direction circonférentielle de la bande de roulement (20) ou se situant dans une plage allant de -10 degrés à -30 degrés par rapport à la direction circonférentielle de la bande de roulement (20).

2. Bandage pneumatique selon la revendication 1, dans lequel lesdites plusieurs rainures (24) représentent un certain nombre de rainures (24) qui sont orientées au moins de manière substantielle dans la direction circonférentielle, de préférence des rainures circonférentielles angulaires, et lesdits segments de rainures (28A) représentent des segments de rainures (28A) qui sont orientés au moins de manière substantielle dans la direction circonférentielle.

3. Bandage pneumatique selon la revendication 1 ou 2, dans lequel la surface la plus externe dans la direction radiale (52) de chaque élément respectif en forme de gradin (52, 54, 56, 58) est disposé à l'intérieur, dans la direction radiale, de la surface la plus externe, dans la direction radiale, de la bande de roulement (20).

4. Bandage pneumatique selon au moins une des revendications précédentes, dans lequel l'indicateur de l'usure de la bande de roulement (50) est réalisé avec une longueur (L₂) qui se situe dans la plage de 30 pour cent à 60 pour cent de la longueur (L₁) du segment de rainure (28A) qui a été sélectionné.

5. Bandage pneumatique selon au moins une des revendications précédentes, dans lequel les repères (60) sont réalisés avec une distance (D) qui s'étend sur une largeur de l'indicateur de l'usure de la bande de roulement (50), qui se situe dans une plage de 80 pour cent à 100 pour cent de la largeur de l'indicateur de l'usure de la bande de roulement (50).

6. Bandage pneumatique selon au moins une des revendications précédentes, dans lequel lesdits plusieurs éléments en forme de gradin (52 54 56 58) sont réalisés en une configuration en forme d'escalier.

7. Bandage pneumatique selon au moins une des revendications précédentes, dans lequel la première surface (52) d'un premier élément parmi les éléments sous la forme de gradins (52) est disposée à une hauteur qui représente de 75 pour cent ou de 70 pour cent à 80 pour cent d'une hauteur de la bande de roulement, la première surface (54A) d'un deuxième élément parmi les éléments sous la forme de gradins (54) est disposée à une hauteur qui représente de 50 pour cent ou de 40 pour cent à 60 pour cent de la hauteur de la bande de roulement, la première surface (56A) d'un troisième élément parmi les éléments sous la forme de gradins (56) est disposée à une hauteur qui représente de 25 pour cent ou de 20 pour cent à 30 pour cent de la hauteur de la bande de roulement, et la première surface (58A) d'un quatrième élément parmi les éléments sous la forme de gradins (58) est disposée à une hauteur qui représente 0 pour cent ou de 0 pour cent à 10 pour cent de la hauteur de la bande de roulement, la hauteur de la bande de roulement se situant de préférence dans une plage de 6 mm à 9 mm dans le cas d'un bandage pneumatique destiné à un véhicule de tourisme ou se situant de préférence dans la plage de 10 mm à 16 mm dans le cas d'un bandage pneumatique destiné à un camion.

8. Bandage pneumatique selon au moins une des revendications précédentes, qui comprend un certain nombre desdits indicateurs de l'usure de la bande de roulement (50), chacun étant réalisé dans un segment de rainure sélectionné respectif parmi les segments de rainures circonférentiels (28A).

9. Bandage pneumatique selon au moins une des revendications précédentes, dans lequel la première découpe (38) et/ou la deuxième découpe (42) possède(nt) une longueur qui se situe dans une plage allant de 100 pour cent à 150 pour cent, de préférence de 110 pour cent à 140 pour cent, de la longueur (L₂) de l'indicateur de l'usure de la bande de roulement (50) dans le segment de rainure qui a été sélectionné (28A).

10. Bandage pneumatique selon au moins une des revendications précédentes, dans lequel la configuration de la première découpe (38) est identique à la configuration de la deuxième découpe opposée (42).

11. Bandage pneumatique selon au moins une des revendications précédentes, dans lequel la largeur du segment de rainure qui a été sélectionné (28A) dans lequel la première découpe (38) fait face à la deuxième découpe (42) représente une largeur qui se situe dans la plage de 105 pour cent à 150 pour cent, de préférence de 110 pour cent à 140 pour cent de la largeur du segment de rainure qui a été sélectionné (28A) dans laquelle la première et la deuxième découpe opposées (38, 42) sont absentes.

12. Bandage pneumatique selon au moins une des revendications précédentes, dans lequel la première découpe (38) et/ou la deuxième découpe (42) possède(nt) la configuration d'une cuvette, de préférence qui comprend des bords arrondis.

13. Bandage pneumatique selon au moins une des revendications précédentes, dans lequel la première découpe (38) et/ou la deuxième découpe (42) s'étend(ent) dans une direction radiale orientée vers l'intérieur à partir de la surface la plus externe dans la direction radiale de l'élément de bande de roulement respectif (22A, 22B) dans lequel elle(s) est/sont réalisée(s), jusqu'à une profondeur de 100 pour cent de la profondeur du segment de rainure qui a été sélectionné (28A) ou jusqu'à une profondeur qui se situe dans la plage de 75 à 100 pour cent de la profondeur du segment de rainure qui a été sélectionné (28A).

14. Procédé de confection d'un bandage pneumatique qui comprend une paire de flancs (12, 14) qui s'étendent dans la direction d'une bande de roulement (20), la bande de roulement (20) englobant un certain nombre d'éléments de bande de roulement (22A, 22B) et un certain nombre de rainures (24) qui comprennent des segments de rainures (28A) et un indicateur de l'usure de la bande de roulement (50) ; dans lequel une première découpe (38) est réalisée dans une paroi d'un premier élément de bande de roulement (22B), la première découpe (38) faisant face à un segment de rainure qui est sélectionné parmi les segments de rainures (28A) ; dans lequel une deuxième découpe (42) est réalisée dans une paroi d'un deuxième élément de bande de roulement (22B), la deuxième découpe (42) faisant face au segment de rainure (28A) qui a été sélectionné et étant disposée à l'opposé de la première découpe (22A) ; dans lequel l'indicateur de l'usure de la bande de roulement (50) est réalisé dans le segment de rainure (28A) qui a été sélectionné et dans la première et la deuxième découpe (38, 42) et s'étend à travers ledit segment et les découpes en question ; dans lequel l'indicateur de l'usure de la bande de roulement (50) englobe un certain nombre d'éléments sous la forme de gradins (52, 54, 56, 58) qui descendent à partir d'une surface de la bande de roulement (20) orientée vers l'extérieur dans la direction radiale ou à partir de l'indicateur de l'usure de la bande de roulement (50) dans la direction de la base du segment de rainure (28A) qui a été sélectionné; dans lequel chaque élément sous la forme d'un gradin (52, 54, 56, 58) englobe une première surface (52A, 54A, 56A, 58A) qui est au moins de manière approximative parallèle à la surface la plus externe de la bande de roulement (20) dans la direction radiale, et une deuxième surface qui s'étend dans la direction radiale (52B, 54B, 56B, 58B) de préférence qui s'étend au moins de manière approximative perpendiculairement à la première surface (52A, 54A, 56A, 58A) ; dans lequel la première surface (52A, 54A, 56A, 58A) de chaque élément sous la forme d'un gradin (52, 54, 56, 58) est réalisée avec des repères (60) ou comprend les repères en question ; dans lequel la totalité desdits repères (60) sont visibles pour un utilisateur du bandage pneumatique (10) à partir d'une direction orientée vers l'extérieur dans la direction radiale lorsque le bandage pneumatique est intact, **caractérisé en ce que** l'indicateur de l'usure de la bande de roulement (50) est réalisé avec une longueur (L₂) qui représente moins de 80 pour cent d'une longueur (L₁) du segment de rainure (28A) qui a été sélectionné et/ou **en ce que** les segments de rainures (28A) s'étendent en formant un angle par rapport à une direction circonférentielle de la bande de roulement (20), l'angle (Θ) se situant dans une plage allant de 10 degrés à 30 degrés par rapport à la direction circonférentielle de la bande de roulement (20) ou se situant dans une plage allant de -10 degrés à -30 degrés par rapport à la direction circonférentielle de la bande de roulement (20), le procédé comprenant l'étape dans laquelle on forme l'indicateur de l'usure de la bande de roulement (50) avec un insert qui est disposé dans un moule dans lequel le bandage pneumatique (10) est vulcanisé.
